# EUROPEAN PATENT APPLICATION

(11) **EP 1 382 250 A1**
(43) Date of publication of application: **21.01.2004**
(21) Application number: 03011778.2
(22) Date of filing: 24.05.2003
(51) Int. Cl.: A21B 3/07

(54) **Loading/unloading system in ovens for cooking food products**

(30) Priority: 18.07.2002 IT VI20020162
(71) Applicant: EUROPA S.R.L., 36034 Molina Di Malo, (Vicenza) (IT)
(72) Inventor: Pietro, Sottoriva, 36035 Marano Vicentino, (Vicenza) (IT)
(74) Representative: Bettello, Pietro, Dott. Ing.

(57) **Abstract**

The finding regards a loading/unloading system in ovens for cooking food products, of the type which uses tins placed on a trolley which is introduced inside the cooking chamber. This system is characterised in that the tins are arranged on a tin-carrying rack (1) the frame of which is removably applied on a loading trolley (3) for which reason, at the end of the loading step, when the tins are arranged on top of the shelves, in the case of fixed-deck ovens, or when they are attached to the rotation device, in the case of rotating ovens, said trolley (3) detaches from the tin-carrying rack (1) and is totally removed from the cooking chamber (4).

## Description

The finding regards a loading/unloading system in ovens for cooking food products.

As is well-known, for cooking food products, in particular bread and pastry products, ovens are used substantially consisting of a convection heated chamber, or else equipped with cooking planes on which the products to be cooked are placed, directly in contact or contained in tins.

In particular, in ovens which use tins, these are placed on a trolley which is introduced and left inside the chamber for the whole of the cooking time.

Such a system for moving tins has numerous operating drawbacks.

A first drawback concerns hygiene, since the tin-carrying trolley is moved in the various treatment sections to be loaded with' tins, for which reason when it is introduced in the cooking chamber the dirt accumulated on the wheels can pollute the area and thus the products being cooked.

A further drawback derives from the fact that the wheels of the trolley are damaged by the heat of the cooking chamber, for which reason they require continuous maintenance or periodic replacement.

A further drawback derives from the fact that during the step of removing the trolley from the oven the operator must respect the injury-prevention regulation and wear heat-proof gloves, to avoid burns caused by accidental contact with the heated metal structure of the trolley.

A further drawback derives from the fact that the base of the cooking chamber, even if placed in contact with the support floor of the oven, is always a certain thickness, for which reason an outer access ramp is needed and this gives, besides an increase in the overall bulk of the oven, also difficulty in manoeuvring the trolley by the operator.

The purpose of the present finding is that of foreseeing a system for loading/unloading tins in the cooking chamber of an oven for cooking food products which eliminates such drawbacks.

This is realised by foreseeing a loading/unloading system in which the tins are arranged on a tin-carrying rack the frame of which is removably applied on a loading trolley for which reason, at the end of the loading step, when the tins are arranged on top of the shelves, in the case of fixed-deck ovens, or when they are attached to the rotation device, in the case of rotating convection ovens, said trolley detaches from the tin-carrying rack and is totally removed from the cooking chamber.

The finding also foresees that the lower part of the loading trolley, equipped with wheels, does not enter in the cooking chamber but slots, from the outside, below it, exactly in the space between the base of said chamber and the support plane of the oven.

With such two constructive solutions at least four operating advantages are achieved.

The first advantage consists of the fact that during cooking inside the cooking chamber only the tins and the tin-carrying rack remain without the wheels which represent a vehicle for contamination for the area and the products being cooked.

The second advantage derives from the fact that the loading trolley does not undergo any heating for which reason it can easily be handled by the operator without the help of individual protection means.

The third advantage is a consequence of the fact that, since the use of the access ramp is no longer required, the base of the cooking chamber can also be substantially raised with respect to the support plane of the oven, for which reason the dispersion of heat downwards is prevented, with a substantial energy saving.

The fourth advantage, still a consequence of the lack of the access ramp to the cooking chamber, is that of being able to realise a gasket in the lower part of the door which works under compression, a method which ensures the best possible seal with the oven closed.

The loading/unloading system according to the finding is completed with the use of a further trolley for moving the tin-carrying rack to be used before and after the loading and unloading operations of the product.

Operatively, the loading operation takes place by firstly taking the moving trolley which supports the rack near to the oven and then moving said rack onto the loading trolley, with which the operator takes care of loading, arranging the rack inside the cooking chamber and then removing the trolley from here.

In the same way, in the loading step, after having opened the oven door, the operator introduces the loading trolley which hooks the rack with the tins and removes it from the cooking chamber. Then the operator couples said trolley with the moving trolley which picks up said rack to take it into the subsequent treatment steps of the product.

The finding shall become clearer through the description of a possible embodiment thereof, given as a non-limiting example, with the help of the attached tables of drawings, where:
- figs. 1-3 (Tav. I) represent the successive steps of the operation of passing the tin-carrying rack from one trolley to the other;
- figs. 4-6 (Tav. II) represent the successive steps of the loading operation;
- fig. 7 (Tav. III) represents a schematic view of an oven during the loading step;
- fig. 8 represents the oven of fig. 7 during the cooking step.

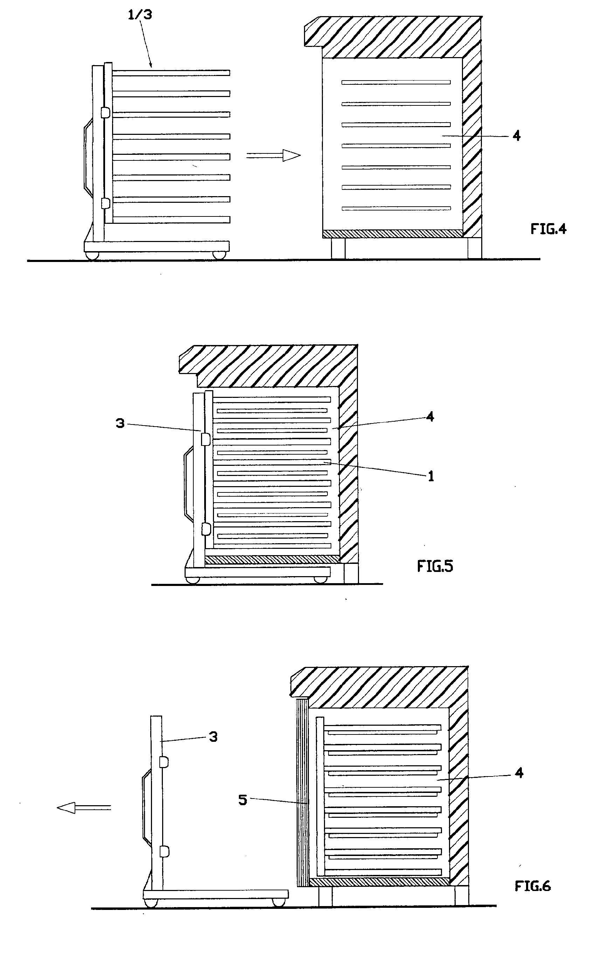

As can be seen in fig. 1, at the start of the loading step the tin-carrying rack 1 is placed on the moving trolley 2, which takes care or taking it to the loading trolley 3 (fig. 1) .

Then the slotting together of the two trolleys and the hooking of the loading trolley 3 for the rack 1 (fig. 2) takes place, so as to free the moving trolley which, empty, moves away (fig. 3).

Thereafter the loading of the tin-carrying rack 1 inside the cooking chamber 4 takes place (figs. 4 and 5).

Finally, the loading trolley 3 withdraws from the cooking chamber, inside which remains the tin-carrying rack 1 and, after the door 5 has been closed, the cooking of the product begins (fig. 6).

0f course, the unloading steps of the product are the same but in reverse, for which reason they are not listed.

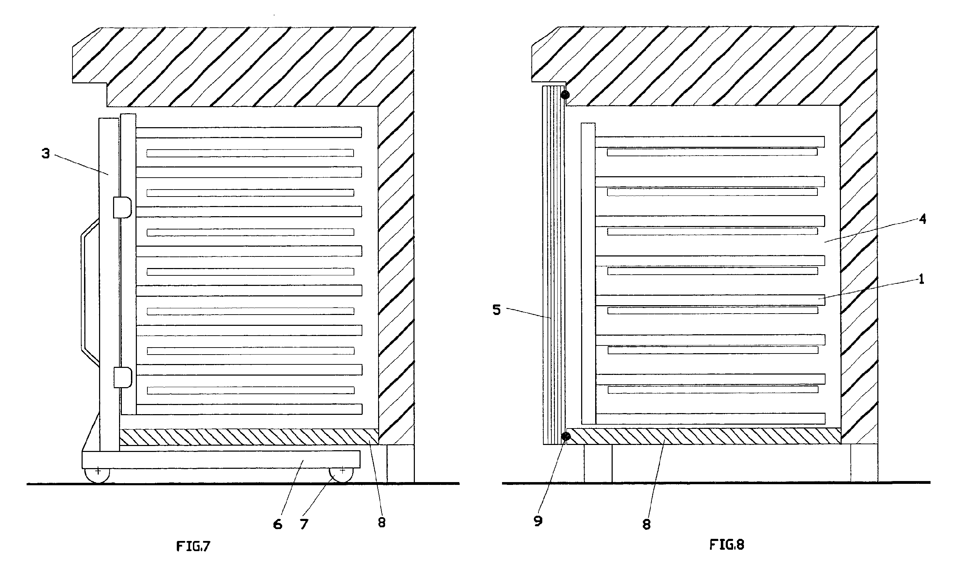

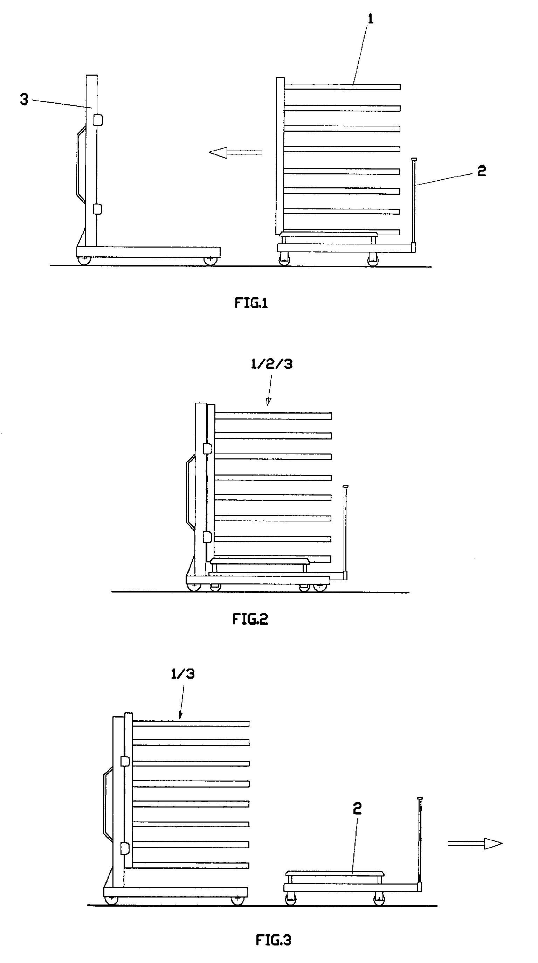

The constructive characteristics of the finding are highlighted in figs. 7 and 8, where it can be seen how, during the loading step, the base 6 equipped with wheels 7 of the loading trolley 3, is arranged outside of and below the flooring 8 of the cooking chamber 4.

Finally, as can be seen in fig. 8, during the cooking step the cooking chamber 4 contains just the tin-carrying rack 1 and is perfectly heat insulated, because it is raised from the floor, as well as equipped with the underdoor gasket 9.

of course, embodiments which are different from that described are possible, in relation to the different configurations and types of cooking oven without, for this reason, departing from the scope of protection of the claims, defined hereafter.

## Claims

1. LOADING/UNLOADING SYSTEM IN OVENS F0R COOKING FOOD PRODUCTS, of the type which uses tins arranged on a trolley which is introduced into the cooking chamber,
said system being **characterised in that**
the tins are arranged on a tin-carrying rack the frame of which is removably applied on a loading trolley for which reason, at the end of the loading step, when the tins are arranged on top of the shelves, in the case of fixed-deck ovens, or when they are attached to the rotation device, in the case of rotating ovens, said trolley detaches from the tin-carrying rack and is totally removed from the cooking chamber.

2. LOADING/UNLOADING SYSTEM IN OVENS F0R COOKING FOOD PRODUCTS, according to claim 1, **characterised in that** the lower part of the loading trolley, equipped with wheels, does not enter in the cooking chamber but slots, from the outside, below the chamber itself, exactly in the space between the base of said chamber and the support plane of the oven.

3. LOADING/UNLOADING SYSTEM IN OVENS FOR COOKING FOOD PRODUCTS, according to claims 1 and/or 2, **characterised in that** it foresees the use of a further trolley for moving the tin-carrying rack to be used before and after the loading and unloading operations of the product.

4. LOADING/UNLOADING SYSTEM IN OVENS F0R COOKING FOOD PRODUCTS, according to one or more of the previous claims, **characterised in that** at the start of the loading step the tin-carrying rack (1) is placed on the moving trolley (2) which takes care of taking it to the loading trolley (3), followed by the slotting together of the two trolleys and the hooking by the loading trolley (3) of the rack (1), so as to free the moving trolley which, empty, moves away.

5. LOADING/UNLOADING SYSTEM IN OVENS F0R COOKING FOOD PRODUCTS, according to claim 4, **characterised in that**, after the loading of the tin-carrying rack (1), the loading trolley (3) withdraws from the cooking chamber (4), inside of which remains the tin-carrying rack for the entire cooking period.

6. LOADING/UNLOADING SYSTEM IN OVENS F0R COOKING FOOD PRODUCTS, according to claims 4 and 5, **characterised in that** during the loading step, the base (6), equipped with wheels (7), of the loading trolley (3), is arranged outside of and below the flooring (8) of the cooking chamber (4).

7. OVEN F0R COOKING FOOD PRODUCTS, equipped with the loading/unloading system according to one or more of the previous claims, **characterised in that** the base (8) of the cooking chamber (4) is raised from the support surface of the oven.

8. OVEN F0R COOKING FOOD PRODUCTS, equipped with the loading/unloading system according to one or more of the previous claims, **characterised in that** the door (5) for closing the cooking chamber (4) is equipped with an underdoor gasket (9) which works under compression.

9. OVEN F0R COOKING FOOD PRODUCTS, equipped with the loading/unloading system according to one or more of the previous claims, **characterised in that** it does not foresee the use of an access ramp to the cooking chamber (4).
